# EUROPEAN PATENT APPLICATION

(11) **EP 2 408 258 A1**
(43) Date of publication of application: **18.01.2012**
(21) Application number: 10169284.6
(22) Date of filing: 12.07.2010
(51) Int. Cl.: H04W 92/02

(54) **Method for establishing an IP session while negotiating an audio channel over CS communication**

(71) Applicant: NEC CASIO Mobile Communications, Ltd., Kawasaki Kanagawa 211-8566 (JP)
(72) Inventor: Fok Ah Chuen, Frédéric, 92100, Boulogne-Billancourt (FR); Lecroart, Benoit, 78380, Bougival (FR)
(74) Representative: Ilgart, Jean-Christophe

(57) **Abstract**

The invention concerns a method for establishing an IP session while negotiating an audio channel over CS communication between a User Equipment and a remote media server.

The method according to the invention comprises the following steps:
- storing in a database (38) of a gateway (6) configuration information comprising at least the user equipment caller number, the IP address allocated to the user equipment (2), The IP service usable by the UE and
upon reception of a CS setup request from the communication device,
- verifying by the gateway (6) whether an IP service can be associated with the CS communication, and,
- if so, forwarding, the CS setup request or converted CS setup request to SIP call, from the gateway to the remote media server ,
- forwarding the IP service connection parameters from the gateway to the user equipment.
- initiating the IP session between the user equipment and the remote media server without requiring further re-negotiation phase.

## Description

### TECHNICAL DOMAIN

The invention pertains to telecommunication field and concerns method for establishing an IP session while negotiating an audio channel over CS communication between a user equipment and a remote server.

The invention also concerns a gateway intended for establishing an IP session between a User Equipment and a remote media server during an audio channel negotiation over CS communication between the user equipment and the gateway.

The invention also concerns a User Equipment adapted to cooperate with the gateway for implementing said method.

### STATE OF PRIOR ART

Transmission of audio within an IP session has opened a number of perspectives for the use of audio in various fields such as home automation, remote technical assistance or the control remote devices in the medical field. For example, in thin client sessions, transfer of audio data within an IP session may allow a thin client user to use the audio device of its remote PC, or may allow an IT helpdesk person with a thin client to assist a PC user by taking control of his PC, while speaking to the remote user, or may allow a user with a thin client terminal to control the remote PC (desktop) by the voice through a speech recognition program.

The known solutions for establishing voice or video call session are based on CS (Circuit-Switched) or on IP using SIP (Session Initiation Protocol) procedures. The procedures allow establishment of rich CS/PS services between communication devices such as mobile user equipments a remote servers.

Document EP1804455 presents how to add real-time video exchange during a CS call, and document EP1744569 presents a method and a system for implementing communication for a CSI terminal to combine CS and IMS (IP Multimedia **S**ubsystem) services. 3GPP TS 22.279, V8.0.0 describes the Combined CS and IMS and introduces service capability detection for flexible service combination, and 3GPP TS 24.279 presents the implementation of the CSI function using CSI user agent. The technologies to interconnect CS media plane with PS (IP) media plane are also well known. For instance Document W02009060325 presents a remote user agent (RUA) capable of interconnecting CS data path to PS data path and document EP 1744569 presents a CS/IMS interworking call connection.

The solutions disclosed in the above prior art documents are designed for dynamic (re)negotiation of an ongoing session, including the use of CS as it allows to have allocated resources at constant bit rate. A drawback of such solutions comes from the fact that in case the thin client terminal uses SIP/IMS for establishing the channels, the signaling phase can be very long as many messages can be exchanged although such negotiation signaling is required to dynamically establish additional media channels during a session. Moreover, the negotiation signaling requires also a significant complexity like the support of SIP signaling with SDP parameters on the terminal compared to CS signaling.

Using CS and IMS such as described by 3GPP CSI specification raised the same issue as described previously and also add a second signaling protocol used for the CS channel. Furthermore, for an IP service (like a thin client connection, or a voice mail service) it is expected to use a solution that may be supported by any terminal and in particular terminal not supporting SIP/IMS signaling and that allows reducing the establishment setup time with a simple configuration on the terminal.

### PRESENTATION OF THE INVENTION

The object of the invention is achieved by means of a method for establishing an IP session while negotiating an audio channel over CS communication between a User Equipment (UE) and a remote media server.

The method according to the invention comprises the following steps:
- storing in a database of an gateway configuration information comprising at least the user equipment caller number, the IP services allowed to the user equipment (UE), and, upon reception of a CS setup request from the communication device,
- verifying by the gateway whether an IP service can be associated with the CS communication, and,
- if so, forwarding the CS setup request from the gateway to the remote media server, or convert the CS setup to a SIP call,
- forwarding the IP service connection parameters from the gateway to the user equipment,
- initiating the IP session between the user equipment and the remote media server without requiring further re-negotiation phase.

In a first embodiment of the invention, the IP service is a thin client connection during which a thin client on the user equipment can transfer the microphone and speaker sound with an audio CS connection to a remote PC. The remote PC can be either a physical PC, or a virtualized PC on a server.

In a second embodiment of the invention, the IP service is a thin client connection during which a thin client user assists with an audio connection a PC Remote user by taking control of his PC while speaking to the remote user.

The method according to the invention is implemented by means of a User Equipment (UE) cooperating with an gateway and adapted for establishing an IP session with a remote media server while negotiating an audio channel over CS communication, the User Equipment (UE) characterized by a first connection module adapted to receive IP connection parameters of the IP service from the gateway in response to a CS call session setup request transmitted from the User Equipment to the gateway in order to initiate the IP session with the remote media server without requiring further re-negotiation phase.

The User Equipment (UE) further comprises a caller number configured and provisioned by the operator of the IP service to the User Equipment (UE).

The gateway is adapted, upon reception of an audio channel CS setup request, for checking the user equipment IP service right, providing the IP service connection parameters to the user equipment, forwarding the audio call to the remote media server.

To this end, the gateway comprises:
- means for receiving a CS call setup request transmitted from the User Equipment,
- means for verifying whether or not an IP service can be associated with the CS communication,
- means for forwarding the CS setup request to the remote media server, or convert the CS setup to SIP call, and,
- means for sending back the IP service connection parameters from the gateway to the user equipment in order to initiate the IP session between the user equipment and the remote media server without requiring further re-negotiation phase.

### BRIEF DESCRIPTION OF THE FIGURES

The invention will be better understood from the following description, taken as a non-limiting example, with reference to the attached figures in which:
- figure 1 schematically represents a wireless communication network architecture in which the method according to the invention may be used,
- figure 2 schematically represents the structure of a User Equipment implementing the method according to the invention,
- figure 3 schematically represents the structure of an gateway intended to cooperate with the User Equipment of figure 2 for implementing the method according to the invention,
- figure 4 schematically represents the flow chart of messages exchanging between gateway, the User Equipment, and the remote media server for implementing the method according to the invention,
- figure 5 schematically represents an implementation example of the invention in which the remote server is a Thin Client Server.

### DESCRIPTION OF A DETAILED ENBODIMENT OF THE INVENTION

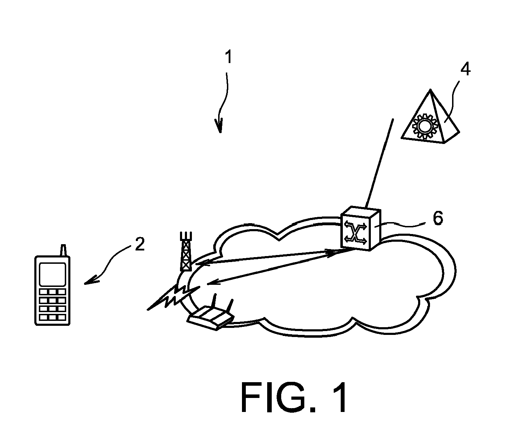

The method according to the invention will be described by reference to figure 1 illustrating a wireless communication network architecture 1 in which a User Equipment (UE) 2 is configured to communicate with a remote media server 4 through a gateway 6.

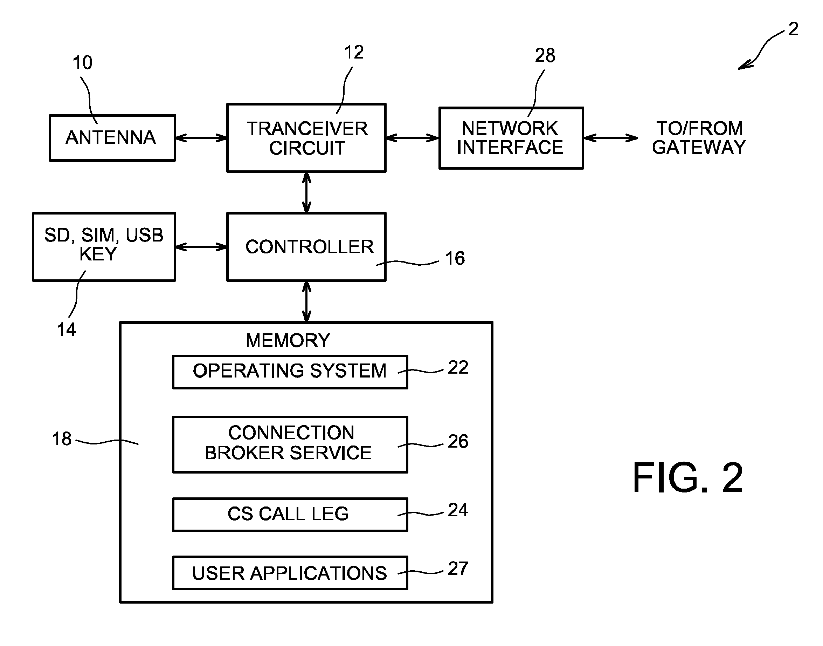

As shown at figure 2, the UE 2 comprises an antenna 10, a first transceiver circuit 12, an identification interface 14, a first controller card 16, and a first memory 18 comprising an operating system 22, a CS Call Leg module 24, and a first Connection Broker Service module 26 and user applications 27. The UE 2 also comprises a first network interface 28 for communicating with the gateway 6.

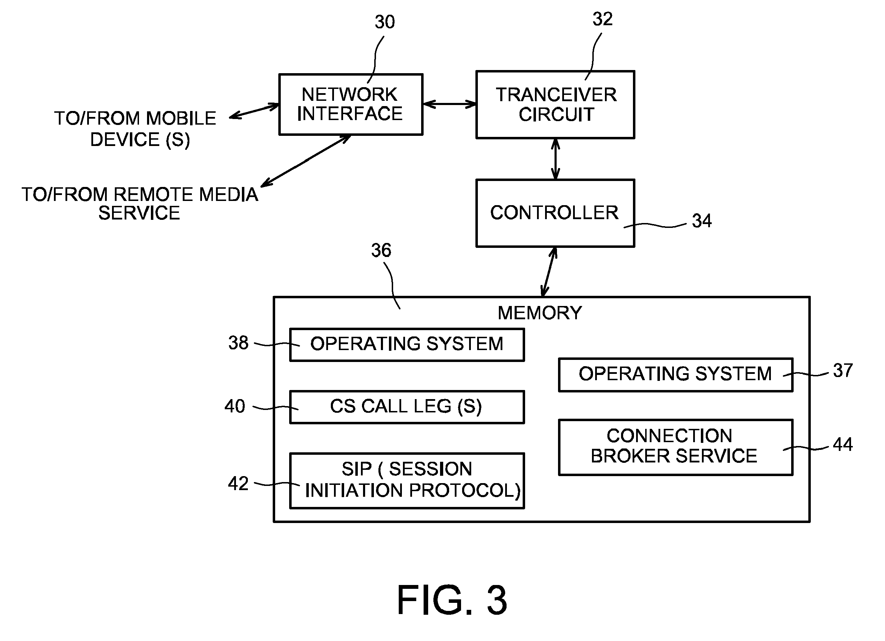

Referring now to figure 3, the gateway 6 comprises a second network interface 30 for communicating with the UE 2, a second transceiver circuit 32, a second controller card 34, and a second memory 36. The second memory 36 comprises an operating system 37, a service database 38, a second a CS call Leg(s) module 40, an SIP (Session Initiation Protocol) module 42, and a second Connection Brokers Service module 44.

The Connection Brokers service module 44 perform tasks consisting of receiving incoming CS call from the UE 2, validating the user right and providing the connection parameters to the user, providing the ability for the user to connect to a specific virtual machine (VM), virtual client, PC blade or terminal services server, providing the ability for the user to access multiple VM pools, monitoring the activity level of a given virtual machine and setting status to active or inactive, handling reassignment of a virtual machine when the user disconnects.

It is to be noted that the gateway 6 forwards the CS call to the remote media server either on another CS Call leg or on a SIP call leg depending on whether the remote media server is accessible through CS or SIP call procedures.

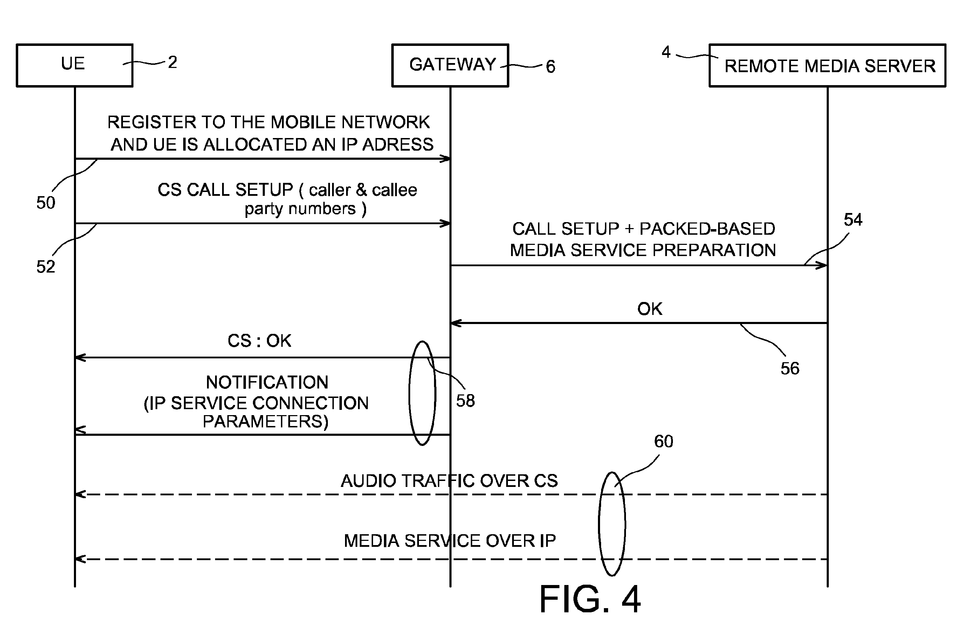

Figure 4 illustrates the messages exchanged between the UE 2, the gateway 6 at one hand, and between the gateway 6 and the remote media server 4 on the other hand for providing IP services to the UE 2 using only the previously established CS call.

The method according to the invention relies on specific configuration of the gateway 6 and the UE 2 in which the gateway 6, preferably located in the Mobile communication network of the operator, is aware of IP services that may be requested by the UE 2.

At step 50, the UE 2 is allocated an IP address after registering to the mobile communication network 1.

At step 52, the UE 2 transmits a CS call setup request to the gateway 6. The UE 2 requests a connection to a service using the CS call setup procedure and runs a software program within the first service Connection Broker Service module 26 to receive from the gateway the IP service connection parameters on a specific port known and/or previously configured by the operator of the service. IP service connection parameters comprise service identifier, IP address, port number, and potentially other service parameters based on the service identifier. For example, when the IP service is a thin client connection, IP service connection parameters comprise list of supported desktop resolution, or a list of possible preferred thin client user session identifier. This later identifier would allow a user to be redirected to the most suitable Thin Client Server (e.g. based on subscription, application preferences, etc.)

Upon reception of the incoming CS call setup request on the CS Call leg, a Software module installed in the gateway 6 determines from the caller number and eventually other CS message parameters, ascertains via the second Connection Broker Service module 44, whether there is an IP service for this audio call (e.g. thin client connection, etc...), and if so, determines the service to start and retrieves the service connection parameters from the service database 38.

At step 54, the gateway 6 completes the received CS call setup request with the service connection information and forwards the CS call setup request and the packet based media service to the remote media server 4.

At step 56, the remote media server 4 acknowledges the reception of the completed CS call setup request and of the packet based media service.

At step 58, the gateway 6 forwards the acknowledgement message to the UE 2 and the IP service connection parameters to the UE 2.

At step 60, The UE 2 and the remote media server 4 exchange audio traffic information. The Connection Broker Service module 26 establishes the service connection to the remote media server with the IP service connection parameters and potentially other service parameters based on the service identifier. For example, when the IP service is a thin client connection, IP service connection parameters comprise list of supported desktop resolution, or a list of possible preferred thin client user session identifier. This later identifier would allow a user to be redirected to the most suitable Thin Client Server (e.g. based on subscription, application preferences, etc.)

The method according to the invention uses CS call setup protocol usually supported on any mobile phone.

In other words, the idea relates to an alternative CSI procedure (for IP media services that are combined with CS call services). More particularly a CS call is performed by indicating a calling number that is analyzed by a gateway in order to allocate and prepare an IP service that is notified to the UE 2 on CS call completion. So a single and fast IP setup connection is provided.

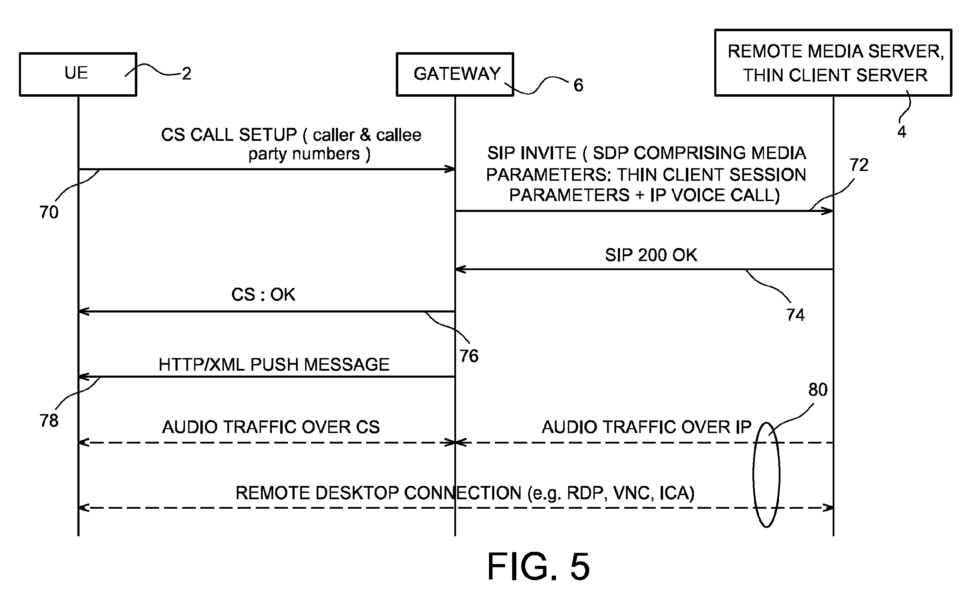

Figure 5 illustrates an example in which a person with a thin client assists a PC user by taking control of his PC, while speaking to the remote user through its PC speaker.

In this example, the first Connection Broker Service module 26 is accessible through HTTP protocol and XML specific formats comprising description of the media session parameters (service identifier, IP address, port number, and other service parameters depending on the service identifier). The remote IP service parameters (Thin Client Server IP address, port, resolution, encoding format ...) are sent by the gateway 6 to UE 2 using HTTP push message. There is no further SIP negotiation of the IP service as it is assumed that the gateway already knows the default preferred parameters of the UE 2. In addition IP parameters can be further adapted during the Remote desktop connection.

At step 70, the UE 2 transmits a CS call setup request to the gateway 6.

At step 72, the gateway 6 converts the CS call setup request in a SIP/SDP (Session Initiation Protocol/Session Description Protocol) comprising thin client session parameters retrieved from the service database 38, and transfers it to the Thin Client Server 4.

At step 74, Thin Client Server 4 acknowledges reception of the completed SIP invite, at step 76, the gateway 6 forwards the acknowledgement message to the UE 2 along with a HTTP/XML push message (step 78).

At step 80, The UE 2 exchange audio call with the gateway 6 over CS while a Remote Desktop Connection using for example e.g. RDP (for Remote Desktop Protocol) or a VNC program (for Virtual Network Computing) or an ICA (for Independent Computing Architecture) is established between the UE 6 and the Thin Client Server 4.

Compared to 3GPP TS 24279 where capabilities information must be exchanged between the UE 2 and the remote media server 4, the method according to the invention assumes that the gateway 6 already knows these capabilities. Therefore, there is no long negotiation phase and it is up to the terminal to decide to establish the IP connection or to cancel to call. This is advantageous in the case where the service is started statically without requiring further re-negotiation phase.

In addition if a service does not require a voice or audio traffic channel, the user of the UE 2 may cancel the audio call while maintaining the IP service path active.

The method according to the invention is suitable for any other IP service requiring an audio channel at startup.

## Claims

1. Method for establishing an IP session while negotiating an audio channel over CS communication between a user equipment (2) and a remote media server (4), **characterized by**:
- storing in a database (38) of a gateway (6) configuration information comprising at least the user equipment caller number, the IP service allowed to the user equipment (2), and ,
upon reception of a CS setup request from the user equipment (2),
- verifying by the gateway (6) whether the IP service can be associated with the CS communication, and,
- if so, forwarding the CS setup request from the gateway (6) to the remote media server (4), or convert the CS setup to a SIP call,
- forwarding the IP service connection parameters from the gateway (6) to the user equipment (2) .
- initiating the IP session between the user equipment (2) and the remote media server (4) without requiring further re-negotiation phase.

2. Method according to claim 1 wherein the IP service is a thin client connection during which a thin client on the user equipment (2) transfers the microphone and speaker sound with an audio CS connection to a remote PC

3. Method according to claim 2 wherein the remote PC can be either a physical PC, or a virtualized PC on a server.

4. Method according to claim 1 wherein the IP service is a thin client connection during which a thin client user assists a PC Remote user by taking control of his PC while speaking to the remote user.

5. User Equipment (2) cooperating with a gateway adapted to establish an IP session with a remote media server (4) while negotiating an audio channel over CS communication, the User Equipment (2) **characterized by** a first Connection Broker Service module (26) adapted to receive IP service connection parameters of the IP service from the gateway (6) in response to a CS call setup request transmitted from the User Equipment (2) to the gateway (6) in order to initiate the IP service between the user equipment (2) and the remote media server (4) without requiring further re-negotiation phase.

6. User Equipment (2) according to claim 5 further comprising a caller number are configured and provisioned by the operator of the IP service.

7. A gateway intended for establishing an IP service between a User Equipment (2) and a remote media server (4) during an audio channel negotiation over CS communication between the user equipment (2) and the gateway (4) for resources, **characterized by**:
- means for receiving a CS call setup request transmitted from the User Equipment (2),
- means for verifying whether or not an IP service can be associated with the CS communication,
- means for forwarding, the CS setup request or converted CS setup request to SIP call, to the remote media server (4), and
- means for sending back IP service connection parameters of the IP service to the user equipment (2) in order to initiate the IP service between the user equipment (2) and the remote media server (4) without requiring further re-negotiation phase.
